(19) Europäisches Patentamt
European Patent Office
Office européen des brevets

(11) **EP 3 629 237 B1**

(12) **EUROPEAN PATENT SPECIFICATION**

(45) Date of publication and mention
of the grant of the patent:
**09.02.2022 Bulletin 2022/06**

(21) Application number: **18197145.8**

(22) Date of filing: **27.09.2018**

(51) International Patent Classification (IPC):
**G06K 9/20** *(2006.01)*　　　**G06K 9/62** *(2022.01)*
**G06K 9/74** *(2006.01)*

(52) Cooperative Patent Classification (CPC):
**G06K 9/6256; G06K 9/6262; G06N 3/08;**
**G06V 10/147; G06V 10/88;** G06K 9/6274

(54) **DEVICE AND METHOD TO IMPROVE THE ROBUSTNESS AGAINST 'ADVERSARIAL EXAMPLES'**

VORRICHTUNG UND VERFAHREN ZUR VERBESSERUNG DER ROBUSTHEIT
GEGENÜBER »KONTRADIKTORISCHEN BEISPIELEN

DISPOSITIF ET PROCÉDÉ POUR AMÉLIORER LA ROBUSTESSE FACE À DES EXEMPLES
CONTRADICTOIRES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**01.04.2020 Bulletin 2020/14**

(73) Proprietor: **Robert Bosch GmbH**
**70442 Stuttgart (DE)**

(72) Inventors:
• **Li, Billy**
**Pittsburgh, Pennsylvania 15217 (US)**
• **Kolter, Jeremy Zico**
**Pittsburgh, Pennsylvania 15217 (US)**

(56) References cited:
• **EYKHOLT KEVIN ET AL: "Robust Physical-World Attacks on Deep Learning Visual Classification", 2018 IEEE/CVF CONFERENCE ON COMPUTER VISION AND PATTERN RECOGNITION, IEEE, 18 June 2018 (2018-06-18), pages 1625-1634, XP033476126, DOI: 10.1109/CVPR.2018.00175 [retrieved on 2018-12-14]**
• **Anish Athalye ET AL: "Synthesizing Robust Adversarial Examples", Proceedings of the 35 th International Conference on Machine Learning, Stockholm, Sweden, PMLR 80, 2018, 24 July 2017 (2017-07-24), pages 284-293, XP055591308, Retrieved from the Internet: URL:http://proceedings.mlr.press/v80/athal ye18b/athalye18b.pdf [retrieved on 2019-05-23]**

**Description**

The invention concerns a method and a system for training an image classifier, a method and a system for operating an actuator, a computer program and a machine-readable storage medium.

Prior art

US10007866 BB discloses a method comprising: accessing, from a memory, a neural network image classifier, the neural network image classifier having been trained using a plurality of training images from an input space, the training images being labeled for a plurality of classes;

computing a plurality of adversarial images by, for each adversarial image, searching a region in the input space around one of the training images, the region being one in which the neural network is linear, to find an image which is incorrectly classified into the plurality of classes by the neural network;
applying the training image to the neural network and observing a response of the neural network;
computing a constraint system which represents the input space using the observed response; and
further training the neural network image classifier to have improved accuracy using at least the adversarial images.

"Universal Adversarial Perturbations Against Semantic Image Segmentation", arXiv preprint arXiv:1704.05712v3, Jan Hendrik Metzen, Mummadi Chaithanya Kumar, Thomas Brox, Volker Fischer, "Adversarial Patch," arXiv preprint arXiv:1712.09665v2, Tom B. Brown, Dandelion Mane, Aurko Roy, Martin Abadi, Justin Gilmer, and "Robust Physical-World Attacks on Deep Learning Models," , arXiv preprint arXiv:1707.08945v5, Kevin Eykholt, Ivan Evtimov, Earlence Fernandes, Bo Li, Amir Rahmati, Chaowei Xiao, Atul Prakash, Tadayoshi Kohno, Dawn Song disclose methods for generating adversarial perturbations.

Advantages of the invention

The methods with the steps of independent claim 1 has the advantage to improve the accuracy of an image classifier against adversarial perturbations in the physical world by enhancing its robustness against adversarial perturbations that are visually not apparent to humans inspectors and do not require the object of interest that is to be misclassified by the classifier to be explicitly modified.

Disclosure of the invention

Image classifiers, like e.g. neural network classification systems can easily be fooled. Recent work has shown that it is possible to modify objects in the real world to ensure that a classifier will mislabel them. For example, Brown et al., (2017) created an "adversarial patch," a small piece of paper that can be placed next to objects to render them all classified as a toaster; Eykholt et al., (2017) showed it was possible to modify a stop sign with stickers such that a classifier would classify it as a speed limit sign.

However, such attacks are not realistic to deploy in the real world because they require that each object of interest for which the classifier is to be fooled has to be explicitly modified. Furthermore, they are visually apparent to humans when inspecting the object and therefore easy to spot.

Surprisingly, it is possible to fool a network such that all objects of a particular are misclassified, and the modification is not visually apparent. To accomplish this, it is possible to use an "adversarial camera sticker", which can be affixed to the lens of the camera itself, and which contains a carefully constructed pattern of dots that causes images viewed by the camera to be misclassified; these dots looks like imperceptible blurry spots in the camera image, and are not easily observable to someone viewing the image.

The main challenge of creating this attack relative to past work is that the space of possible perturbations we can feasibly introduce with this model is very limited: This is unlike in past attacks, which operate in the pixel space of the images. The optics of the camera mean that it is only possible to create blurry dots without any of the high frequency patterns typical of most adversarial attacks. Because of the translucency, such attacks are hard to detect for a human. Therefore, there is a need to make systems, especially safety-critical systems that use image classifiers which are e.g. based on neural networks, robust against such adversarial attacks.

In a first aspect, the invention is concerned with a method for training image classifiers with the features of claim 1. An image classifier thus trained is particularly robust against adversarial attacks as described above.

In another aspect, the invention is concerned with a computer-implemented method for assessing a robustness of an actuator control system for operating an actuator in accordance with sensor signal from a sensor, said actuator control system comprising an image classifier that is configured to compute an output signal depending on said sensor signal, wherein said actuator control system is configured to determine an actuator control signal depending on said output signal, comprising:

- accessing, from a memory, the image classifier, the image classifier having been trained using a plurality of training images from an input space, the training images being labeled for a plurality of classes;
- receiving said sensor signal from the sensor, said sensor signal comprising image data of a physical object;
- determining, by the image classifier, a first output signal that characterizes a classification of said image data;
- providing a function that characterizes the effect of an at least partially translucent further object in an optical path between the sensor and the physical object on the image data;
- providing altered image data depending on said image data and said function;
- determining, by the image classifier, a second output signal that characterizes a classification of said altered image data; and
- determining a robustness depending on said first output signal and on said second output signal.

Such a method allows to reliably monitor whether the actuator control system is robust against the attacks as outlined above.

Further enhancements to these aspects are the subject-matter of the dependent claims.

The above invention relies on a method to model translucent images in a way that they may exhibit adversarial behavior. This is made possible e.g. be directly optimizing such adversarial attacks over a highly reduced set of image perturbations, in this case a collection of blurred translucent dots superimposed over the image; and a method for optimizing attacks that are robust to slight changes of position, orientation, and relative placement of the dots: Traditional (universal) attacks on, say, neural network models may use the following approach: To find a perturbation $\delta$ such that for any input (e.g., an image represented as a 2D matrix) X, it is possible to maximize the loss

$$\max_{\|\delta\| \leq \epsilon} \sum_{i=1}^{m} \ell(h(X_i + \delta), y_i) \qquad (1)$$

where h is the neural network classifier, $y_i$ denotes the true label, and $\ell$ is a loss function, $\epsilon$ is some appropriate perturbation size, and the sum is over a training set of images. This formulation is useful if it is intended to learn a single perturbation that maximizes the loss over all images. Small modifications, such as targeted attacks that try to explicitly classify examples as one particular class, or only targets a particular instance of true class (i.e., only turns stop signs to speed limit signs), are possible by just changing the loss function to only penalize these target classes.

Some improvements on this framework will be outlined below. First, it may not be necessary to consider a general perturbation $\delta$ in pixel space of the image, but rather we consider perturbations in a substantially reduced space. In particular, it is possible to limit perturbations to a perturbation space consisting of blurred translucent dots. Experimentation have shown that this is a suitable representation of e.g. the perturbations that can be achieved by stickers placed directly on the camera lens.

Preferably, such perturbations are parameterized by a location of the dot in the image and/or a color of the dot and/or a radius of the dot and/or a function that maps from distance to dot center to an alpha value.

A perturbation module to compute an adjusted, adversarial image $\hat{X}$ from an image X may be given by adjusting the image via alpha blending

$$\hat{X}(x,y) = X(x,y) \cdot \left(1 - \alpha(x,y)\right) + color \cdot \alpha(x,y) \qquad (2)$$

where $\alpha(x,y)$ the location-dependent alpha value computed as

$$\alpha(x,y) = f\left(\frac{(x - center_x)^2 + (y - center_y)^2}{radius}\right) \qquad (3)$$

Preferably, function $\alpha$ is rotationally symmetric in the x-y-plane, making it effectively one-dimensional as a function of distance from the center. One possible function would be a scaled exponential $f(x) = k \cdot \exp(-x^2)$, though many alternatives are possible.

It is possible to iterate this process to form a perturbation that displays several translucent dots. The parameters of the dots will be labelled by the Greek letter $\theta$ in the following, and by $\hat{X}(\theta)$ denotes an image that has been perturbed in the manner. Given such a parametrized perturbation, it is them possible to optimize this parameterization using projected gradient descent, i.e. optimizing the expression

$$\max_{\theta \in \Theta} \sum_{i=1}^{m} \ell\left(h\left(\hat{X}_i(\theta)\right), y_i\right) \qquad (4)$$

where $\Theta$ denotes some allowable set of parameters.

In order to add an additional level of robustness to the attacks, because e.g. a precise location of a sticker is unknown, it is possible to require that the parametrized perturbation is robust to slight modifications of the attack parameters $\Theta$ (corresponding, e.g., to a slight rotation or translation of the dots, or a slight difference in translucency). Because of this, the attack formulation itself uses a robust optimization formulation, which corresponds to solving the optimization problem

$$\min_{\xi \in \Xi} \max_{\theta \in \Theta} \sum_{i=1}^{m} \ell\left(h\left(\hat{X}_i(\theta + \xi)\right), y_i\right) \qquad (5)$$

where $\Xi$ denotes some allowable set of (additive) perturbations of the original perturbation parameters $\Theta$. It is possible to optimize this quantity via projected gradient descent, taking multiple inner steps (i.e., finding a universal perturbation under a fixed $\xi$ a then solving the inner maximization problem to high accuracy and then taking a single gradient step in $\xi$.

In order to learn a perturbation in the reduced space, and ensure that it is physically realizable within a manufacturing process, the following method may be envisioned. It should be noted that it is not always easy to match between a printable (i.e., physically manufacturable) sticker and the actual model built described above. To address this issue, it is possible to use the same differentiable perturbation model to fit observed data from a real printed example generated by a printer. Specifically, given some background image $X_0$, a test sticker manufactured by the printer, and an image X of the same background image taken from the camera with the sticker attached to the lense, it is possible to use the same perturbation model to fit the parameters of the physically realizable perturbation, i.e., by solving the optimization problem

$$\min_{\theta} \left\| \hat{X}_0(\theta) - X \right\|^2$$

via gradient descent. By repeating these steps for several images, it is possible to obtain a space of "achievable" perturbations, which can then be adjusted while remaining in this achievable space (i.e., by only moving the dots in the printed image rather than changing their translucency or size).

Embodiments of the invention will be discussed with reference to the following figures in more detail. The figures show:

Figure 1    an actuator control system having an image classifier controlling an actuator in its environment;

Figure 2    a sensor sensing a physical object with an object in an optical path;

Figure 3    the actuator control system controlling an at least partially autonomous robot;

Figure 4    the actuator control system controlling a manufacturing machine;

Figure 5    the actuator control system controlling an automated personal assistant;

Figure 6    the actuator control system controlling; an access control system;

Figure 7    a training system for controlling the image classifier;

Figure 8    a flow-chart diagram of a training method carried out by said training system;

Figure 9    a flow-chart diagram illustrating a method for operating said actuator control system.

Description of the embodiments

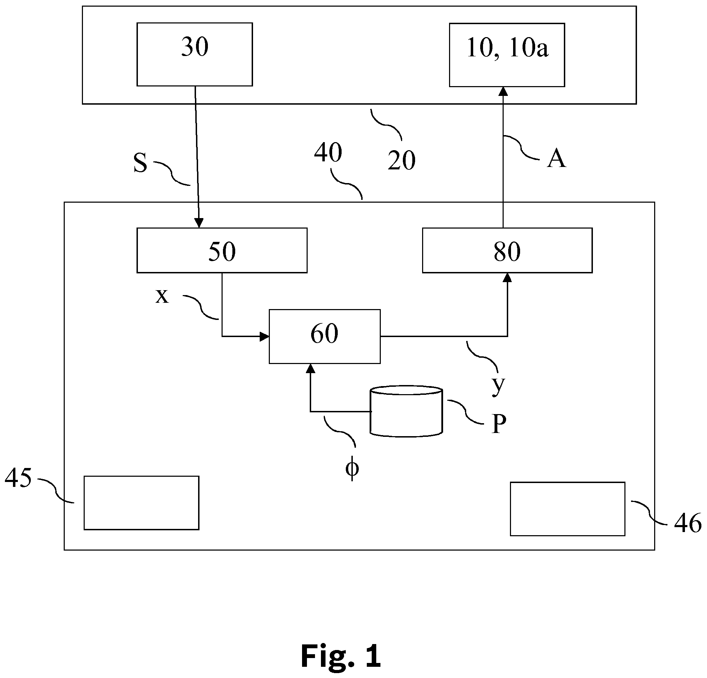

Shown in figure 1 is one embodiment of an actuator 10 in its environment 20. Actuator 10 interacts with an actuator control system 40. Actuator 10 and its environment 20 will be jointly called actuator system. At preferably evenly spaced distances, a sensor 30 senses a condition of the actuator system. The sensor 30 may comprise several sensors. Preferably, sensor 30 is an optical sensor that takes images of the environment 20. An output signal S of sensor 30 (or, in case the sensor 30 comprises a plurality of sensors, an output signal S for each of the sensors) which encodes the sensed condition is transmitted to the actuator control system 40.

Thereby, actuator control system 40 receives a stream of sensor signals S. It the computes a series of actuator control commands A depending on the stream of sensor signals S, which are then transmitted to actuator 10.

Actuator control system 40 receives the stream of sensor signals S of sensor 30 in an optional receiving unit 50. Receiving unit 50 transforms the sensor signals S into input signals x. Alternatively, in case of no receiving unit 50, each sensor signal S may directly be taken as an input signal x. Input signal x may, for example, be given as an excerpt from sensor signal S. Alternatively, sensor signal S may be processed to yield input signal x. Input signal x comprises image data corresponding to an image recorded by sensor 30. In other words, input signal x is provided in accordance with sensor signal S.

Input signal x is then passed on to an image classifier 60, which may, for example, be given by an artificial neural network.

Image classifier 60 is parametrized by parameters $\phi$, which are stored in and provided by parameter storage P.

Image classifier 60 determines output signals y from input signals x. The output signal y comprises information that assigns one or more labels to the input signalOutput signals y are transmitted to a conversion unit 80, which converts the output signals y into the control commands A. Actuator control commands A are then transmitted to actuator 10 for controlling actuator 10 accordingly.

Actuator 10 receives actuator control commands A, is controlled accordingly and carries out an action corresponding to actuator control commands A. Actuator 10 may comprise a control logic which transforms actuator control command A into a further control command, which is then used to control actuator 10.

In further embodiments, actuator control system 40 may comprise sensor 30. In even further embodiments, actuator control system 40 alternatively or additionally may comprise actuator 10.

Furthermore, actuator control system 40 may comprise a processor 45 (or a plurality of processors) and at least one machine-readable storage medium 46 on which instructions are stored which, if carried out, cause actuator control system 40 to carry out a method according to one aspect of the invention.

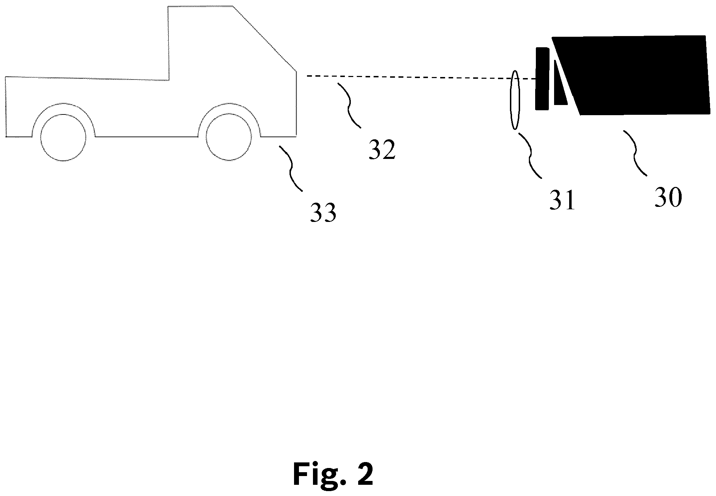

Figure 2 shows an exemplary adversarial attack on the sensor 30, in this case a camera, registers an image of a physical object 33, like e.g. a vehicle. This registers image can then be passed on to actuator control system 40, as illustrated in figure 1. A partially translucent sticker 31 is placed such that it intersects with an optical path 32 between camera 30 and physical object 33, thus altering the camera's perception of the physical object 33.

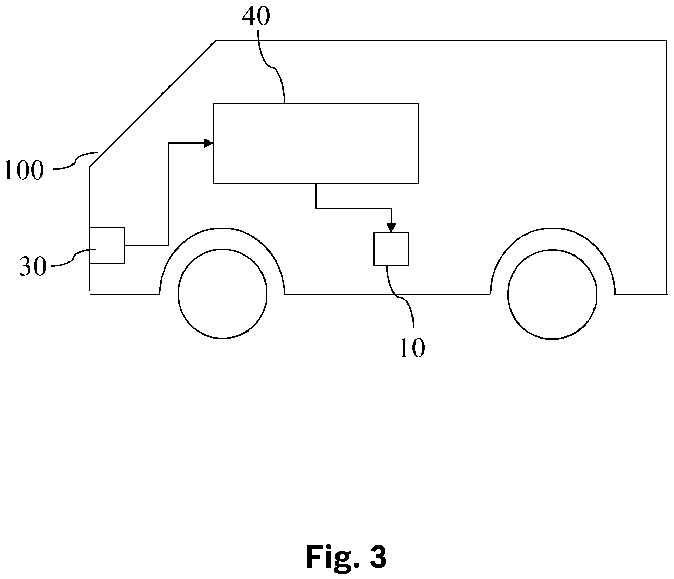

Figure 3 shows an embodiment in which actuator control system 40 is used to control an at least partially autonomous robot, e.g. an at least partially autonomous vehicle 100.

Sensor 30 may comprise one or more video sensors and/or one or more radar sensors and/or one or more ultrasonic sensors and/or one or more LiDAR sensors and or one or more position sensors (like e.g. GPS). Some or all of these sensors are preferably but not necessarily integrated in vehicle 100. Alternatively or additionally sensor 30 may comprise an information system for determining a state of the actuator system. One example for such an information system is a weather information system which determines a present or future state of the weather in environment 20.

For example, using input signal x, the image classifier 60 may for example detect objects in the vicinity of the at least partially autonomous robot. Output signal y may comprise an information which characterizes where objects are located in the vicinity of the at least partially autonomous robot. Control command A may then be determined in accordance with this information, for example to avoid collisions with said detected objects.

Actuator 10, which is preferably integrated in vehicle 100, may be given by a brake, a propulsion system, an engine, a drivetrain, or a steering of vehicle 100. Actuator control commands A may be determined such that actuator (or actuators) 10 is/are controlled such that vehicle 100 avoids collisions with said detected objects. Detected objects may also be classified according to what the image classifier 60 deems them most likely to be, e.g. pedestrians or trees, and actuator control commands A may be determined depending on the classification.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, actuator command control A may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses sensor 30, preferably an optical sensor, to determine a state of plants in the environment 20. Actuator 10 may be a nozzle for spraying chemicals. Depending on an identified species and/or an identified state of the plants, an actuator control command A may be determined to cause actuator 10 to spray the plants with a suitable quantity of suitable chemicals.

In even further embodiments, the at least partially autonomous robot may be given by a domestic appliance (not shown), like e.g. a washing machine, a stove, an oven, a microwave, or a dishwasher. Sensor 30, e.g. an optical sensor, may detect a state of an object which is to undergo processing by the household appliance. For example, in the case of the domestic appliance being a washing machine, sensor 30 may detect a state of the laundry inside the washing machine. Actuator control signal A may then be determined depending on a detected material of the laundry.

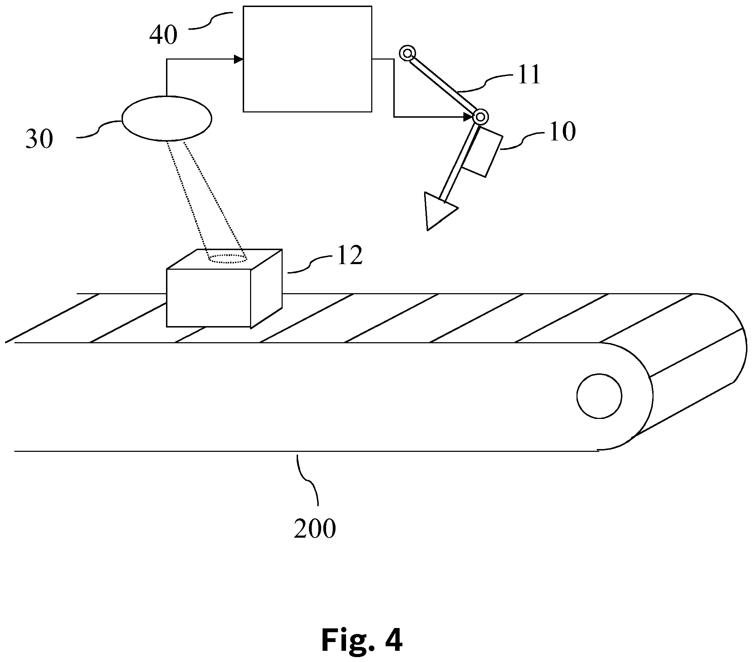

Shown in figure 4 is an embodiment in which actuator control system 40 is used to control a manufacturing machine 11, e.g. a punch cutter, a cutter or a gun drill) of a manufacturing system 200, e.g. as part of a production line. The actuator control system 40 controls an actuator 10 which in turn control the manufacturing machine 11.

Sensor 30 may be given by an optical sensor which captures properties of e.g. a manufactured product 12. Image classifier 60 may determine a state of the manufactured product 12 from these captured properties. Actuator 10 which controls manufacturing machine 11 may then be controlled depending on the determined state of the manufactured product 12 for a subsequent manufacturing step of manufactured product 12. Or, it may be envisioned that actuator 10 is controlled during manufacturing of a subsequent manufactured product 12 depending on the determined state of the manufactured product 12.

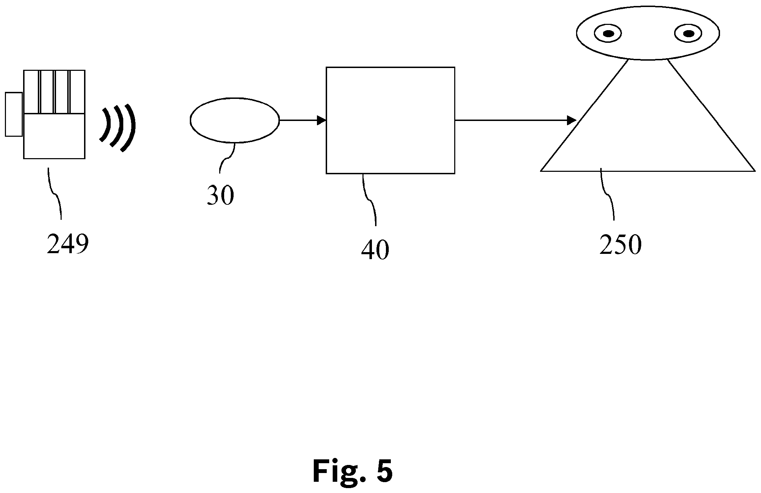

Shown in figure 5 is an embodiment in which actuator control system 40 is used for controlling an automated personal assistant 250. Sensor 30 may be an optic sensor, e.g. for receiving video images of a gestures of user 249.

Actuator control system 40 then determines actuator control commands A for controlling the automated personal assistant 250. The actuator control commands A are determined in accordance with sensor signal S of sensor 30. Sensor signal S is transmitted to the actuator control system 40. For example, image classifier 60 may be configured to e.g. carry out a gesture recognition algorithm to identify a gesture made by user 249. Actuator control system 40 may then determine an actuator control command A for transmission to the automated personal assistant 250. It then transmits said actuator control command A to the automated personal assistant 250.

For example, actuator control command A may be determined in accordance with the identified user gesture recognized by image classifier 60. It may then comprise information that causes the automated personal assistant 250 to retrieve information from a database and output this retrieved information in a form suitable for reception by user 249.

In further embodiments, it may be envisioned that instead of the automated personal assistant 250, actuator control system 40 controls a domestic appliance (not shown) controlled in accordance with the identified user gesture. The domestic appliance may be a washing machine, a stove, an oven, a microwave or a dishwasher.

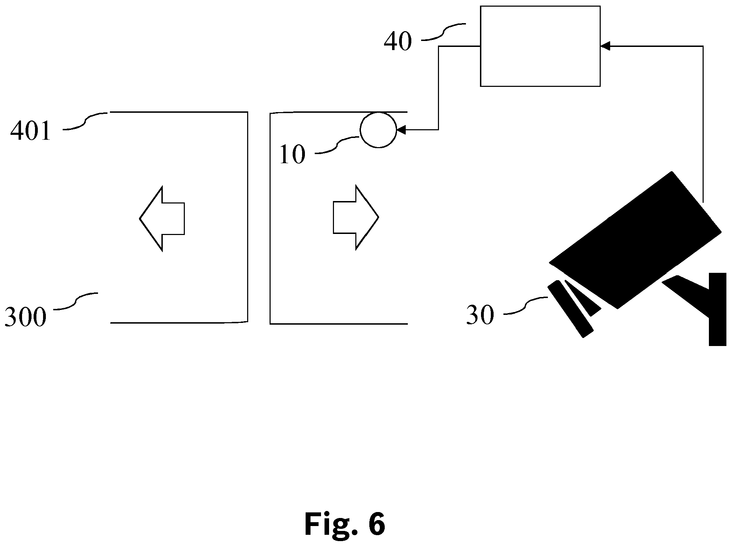

Shown in figure 6 is an embodiment in which actuator control system controls an access control system 300. Access control system may be designed to physically control access. It may, for example, comprise a door 401. Sensor 30 is configured to detect a scene that is relevant for deciding whether access is to be granted or not. It may for example be an optical sensor for providing image or video data, for detecting a person's face. Image classifier 60 may be configured to interpret this image or video data e.g. by matching identities with known people stored in a database, thereby determining an identity of the person. Actuator control signal A may then be determined depending on the interpretation of image classifier 60, e.g. in accordance with the determined identity. Actuator 10 may be a lock which grants access or not depending on actuator control signal A. A non-physical, logical access control is also possible.

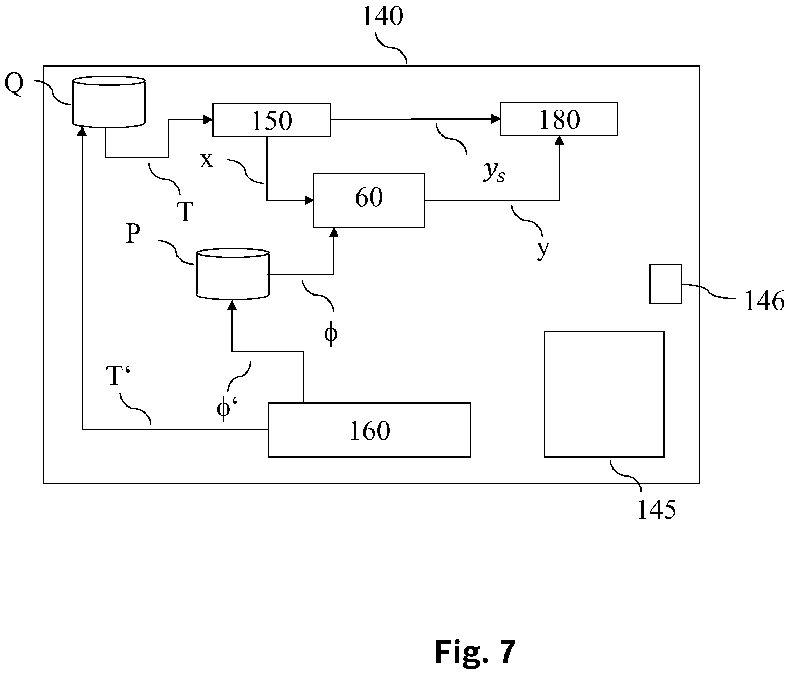

Shown in figure 7 is an embodiment of a training system 140 for training image classifier 60. A training data unit 150 determines input signals x, which are passed on to image classifier 60. For example, training data unit 150 may access a computer implemented database Q in which a set T of training data is stored. Set T comprises pairs of input signal x and corresponding desired output signal $y_s$. Training data unit 150 selects samples from set T, e.g. randomly. Input signal x of a selected sample is passed on to image classifier 60. Desired output signal $y_s$ is passed on to assessment unit 180.

Image classifier 60 is configured to compute output signals y from input signals x. These output signals x are also passed on to assessment unit 180.

A modification unit 160 determines updated parameters $\phi'$ depending on input from assessment unit 180. Updated parameters $\phi'$ are transmitted to parameter storage P to replace present parameters $\phi$.

For example, it may be envisioned that assessment unit 180 determines the value of a loss function $\mathcal{L}$ depending on output signals y and desired output signals $y_s$. Modification unit 160 may then compute updated parameters $\phi'$ using e.g. stochastic gradient descent to optimize the loss function $\mathcal{L}$.

Furthermore, modification unit 160 may compute an adversarial dataset T' comprising modified output signals x taken, for example, from training set T and their respective desired output signals ys.

Furthermore, training system 140 may comprise a processor 145 (or a plurality of processors) and at least one machine-readable storage medium 146 on which instructions are stored which, if carried out, cause actuator control system 140 to carry out a method according to one aspect of the invention.

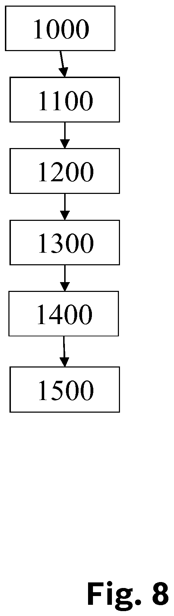

Shown in figure 8 is a flow-chart diagram of an embodiment of the method for training image classifier 60, what may be implemented by training system 140.

First (1000), image classifier 60 is trained with training data of Set T in a conventional manner, as discussed above.

Then (1100), a plurality of images $X_i$ of physical objects and their respective labels $y_i$ is provided.

In a next step (1200), a function $\alpha$ describing a monochromatic translucency of an obstacle 31 in an optical path between a camera and the respective image $X_i$ is provided. This function $\alpha$ is parametrized by parameters $\theta$ and may be given by expression (3), or by a sum of a plurality of terms of expression (3), with parameters that are preferably independent of each other.

In a next step (1300), adversarial images $\hat{X}_i$ are provided by superimposing the respective image $X_i$ with the function $\alpha$ describing the monochromatic translucency of obstacle 31 according to equation (2). Furthermore, a set of $\Xi$ of additive perturbations $\xi$ of the parameters $\theta$ under which the obstacle 31 is supposed to be robust are provided. Parameters $\theta$ are optimized according to equation (5) using projected gradient descent. Preferably, parameters $\theta$ are limited to predefined regions in parameter space that correspond to obstacles 31 that can be realized in the real world.

In a next step (1400), adversarial images $\hat{X}_i$ and respective labels $y_i$ of the original images $X_i$ are added to an adversarial dataset T' that is also provided to the dataset T.

Then (1500), image classifier 60 is further trained using the added data from the adversarial dataset T' in conventional manner like in step (1000). This concludes the method.

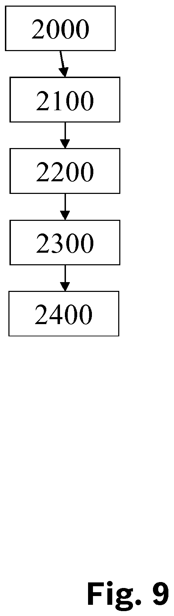

Shown in figure 9 is a flow-chart diagram of a method for operating the actuator control system 40. First (2000), parameters $\theta$ that characterize the function $\alpha$ describing the monochromatic translucency of obstacle 31 are provided, such that they are optimized according to equation (5). They may, for example be obtained by carrying out steps (1100)-(1300) of the method described in figure 8.

Then (2100), actuator control system 40 receives a sensor signal S from sensor 30. Sensor signal S is transformed into input signal x1 comprising image data $X$ encoded, which is provided to image classifier 60, yielding a corresponding label, or output signal, y1.

Then (2200), a second input signal x2 is determined comprising altered image data $\hat{X}$, wherein said adversarial image data $\hat{X}$ is determined depending on image data $X$ by superimposing it with the function $\alpha$ describing the monochromatic translucency of obstacle 31 according to equation (2). The second input signal x2 is provided to image classifier 60, yielding a correspond second output signal y2.

In a next step (2300), depending on a similarity measure of output signal y1 and second output signal y2, a level of robustness may be determined, based on which it is determined in which mode actuator 10 is to be operated. For example, it may be envisioned that a first actuator control signal A1 is determined in accordance with output signal y1, and that a second actuator control signal A2 is determined in accordance with second output signal y2. The level of robustness may be determined to be low if an action which actuator 10 is to perform if it is actuated in accordance with actuator control signal A1 differs from an action with actuator 10 is to perform if it is actuated in accordance with second actuator control signal A2. In turn, the level of robustness may be determined to be high if the action which actuator 10 is to perform if it is actuated in accordance with actuator control signal A1 is not, or not substantially, different from an action with actuator 10 is to perform if it is actuated in accordance with second actuator control signal A2.

In a next step (2400), an operating mode for operating actuator 10 is selected in accordance with the selected level of robustness. For example, actuator 10 may be operated in a normal mode if the level of robustness is determined to be high, and it may be operated in a safe mode with e.g. limitations on the set of actions which actuator 10 may perform if the level of robustness is determined to be low. This concludes the method.

**Claims**

1. A computer-implemented method for training an image classifier (60) having improved accuracy for classifying images of physical objects taken with a sensor (30), comprising:

   - accessing, from a memory (146), the image classifier (60), the image classifier (60) having been trained using a plurality of training images from an input space, the training images being labeled for a plurality of classes;
   - providing a labeled image of a physical object (33);
   - generating an adversarial image to the further provided image by at least a partially translucent further object (31) affixed to a lens of the sensor (30) with which the provided image was taken, and the physical object (33) on the provided image,
   wherein the at least partially translucent further object (31) is configured to induce an adversarial attack on the training images;
   - and further training the image classifier (60) to have improved accuracy using at least the adversarial image.

2. The method according to claim 1, in which during the further training the adversarial image is labeled with the same label as the labeled image.

3. The method according to claim 1 or 2, in which the at least partially translucent object (31) is monochromatic.

4. The method according to any one of the above claims, in which the at least partially translucent further object (31) is parametrized by parameters including at least one of color, radius, and central position of a structure of the at least partially translucent object (31).

5. The method according to any one of claims 1 to 4, in which the adversarial image is generated by modifying parameters characterizing the at least partially translucent further object (31) such that the at least partially translucent object (31) causes maximum change in the classifications of images taken with the sensor (30), said classifications being obtained by the image classifier (60).

6. The method according to claim 5, in which the adversarial image is generated by modifying parameters characterizing the at least partially translucent further object (31) such that the change caused by the at least partially translucent object (31) is robust under variations to at least one of the parameters.

7. A computer-implemented method for operating an actuator control system (40) for operating an actuator (10), said actuator control system (40) comprising an image classifier (60), comprising:

training the image classifier (60) with the method according to any one of the above claims and operating the actuator control system (40) by receiving a sensor signal (S) comprising image data from a sensor (30), determining an input signal (x) depending on said sensor signal (S), feeding said input signal (x) into the image classifier (60) to obtain an output signal (y),
operating the actuator control system (40) by receiving a sensor signal (S) and determining an actuator control signal (A) for operating the actuator (10) depending on an output signal (y) of the image classifier (60) that corresponds to said input signal (x).

8. The method according to any one of claims 7, in which the actuator (10) controls an at least partially autonomous robot (100) and/or a manufacturing machine (200) and/or an automated personal assistant (250) and/or an access control system (300).

9. Computer program comprising instructions which, when the program is executed by a processor (45,145), cause the processor (45,145) to carry out the method according to any one of the preceding claims

10. Machine-readable storage medium (46, 146) on which the computer program according to claim 9 is stored.

11. System comprising means to carry out the method according to any of the claims 1 to 8.

**Patentansprüche**

1. Computer-implementiertes Verfahren zum Trainieren eines Bildklassifizierers (60), der verbesserte Genauigkeit zum Klassifizieren von Bildern von physischen Objekten, die mit einem Sensor (30) gemacht wurden, aufweist, umfassend:

- Zugreifen, aus einem Speicher (146), auf den Bildklassifizierer (60), wobei der Bildklassifizierer (60) unter Verwendung einer Mehrzahl von Trainingsbildern aus einem Eingaberaum trainiert wurde, wobei die Trainingsbilder für eine Mehrzahl von Klassen gelabelt werden;
- Bereitstellen eines gelabelten Bilds eines physischen Objekts (33);
- Erzeugen eines feindlichen Bilds für das weitere bereitgestellte Bild mittels mindestens eines teilweise durchscheinenden weiteren Objekts (31), das an einem Objektiv des Sensors (30), mit dem das bereitgestellte Bild gemacht wurde, befestigt ist, und des physischen Objekts (33) auf dem bereitgestellten Bild,
wobei das mindestens teilweise durchscheinende weitere Objekt (31) dafür ausgelegt ist, einen feindlichen Angriff auf die Trainingsbilder einzuleiten;
- und ferner Trainieren des Bildklassifizierers (60) dafür, unter Verwendung von zumindest dem feindlichen Bild eine verbesserte Genauigkeit aufzuweisen.

**2.** Verfahren nach Anspruch 1, bei dem während des weiteren Trainierens das feindliche Bild mit demselben Label wie das gelabelte Bild gelabelt wird.

**3.** Verfahren nach Anspruch 1 oder 2, bei dem das zumindest teilweise durchscheinende Objekt (31) monochrom ist.

**4.** Verfahren nach einem der obigen Ansprüche, bei dem das zumindest teilweise durchscheinende weitere Objekt (31) durch Parameter parametrisiert ist, die Farbe und/oder Radius und/oder Mittenposition einer Struktur des zumindest teilweise durchscheinenden Objekts (31) beinhalten.

**5.** Verfahren nach einem der Ansprüche 1 bis 4, bei dem das feindliche Bild durch Modifizieren von Parametern, die das zumindest teilweise durchscheinende weitere Objekt (31) charakterisieren, erzeugt wird, so dass das zumindest teilweise durchscheinende Objekt (31) eine maximale Änderung der Klassifikationen von Bildern, die mit dem Sensor (30) gemacht wurden, bewirkt, wobei die Klassifikationen durch den Bildklassifizierer (60) erhalten werden.

**6.** Verfahren nach Anspruch 5, bei dem das feindliche Bild durch Modifizieren von Parametern, die das zumindest teilweise durchscheinende weitere Objekt (31) charakterisieren, erzeugt wird, so dass die durch das zumindest teilweise durchscheinende Objekt (31) bewirkte Änderung gegenüber Variationen an mindestens einem der Parameter robust ist.

**7.** Computer-implementiertes Verfahren zum Betreiben eines Aktuatorsteuerungssystems (40) zum Betreiben eines Aktuators (10), wobei das Aktuatorsteuerungssystem (40) einen Bildklassifizierer (60) umfasst, umfassend:

Trainieren des Bildklassifizierers (60) mit dem Verfahren nach einem der obigen Ansprüche und Betreiben des Aktuatorsteuerungssystems (40) durch Empfangen eines Sensorsignals (S), das Bilddaten umfasst, von einem Sensor (30), Bestimmen eines Eingabesignals (x) in Abhängigkeit von dem Sensorsignal (S), Einspeisen des Eingabesignals (x) in den Bildklassifizierer (60), um ein Ausgabesignal (y) zu erhalten,
Betreiben des Aktuatorsteuerungssystems (40) durch Empfangen eines Sensorsignals (S) und Bestimmen eines Aktuatorsteuerungssignals (A) zum Betreiben des Aktuators (10) in Abhängigkeit von einem Ausgabesignal (y) des Bildklassifizierers (60), das dem Eingabesignal (x) entspricht.

**8.** Verfahren nach einem der Ansprüche 7, bei dem der Aktuator (10) einen zumindest teilweise autonomen Roboter (100) und/oder eine Fertigungsmaschine (200) und/oder einen automatisierten persönlichen Assistenten (250) und/oder ein Zutrittssteuerungssystem (300) steuert.

**9.** Computerprogramm, das Anweisungen umfasst, die, wenn das Programm durch einen Prozessor (45, 145) ausgeführt wird, den Prozessor (45, 145) zum Ausführen des Verfahrens nach einem der vorhergehenden Ansprüche veranlassen.

**10.** Maschinenlesbares Speicherungsmedium (46, 146), auf welchem das Computerprogramm nach Anspruch 9 gespeichert wird.

**11.** System, das Mittel zum Ausführen des Verfahrens nach einem der Ansprüche 1 bis 8 umfasst.

**Revendications**

**1.** Procédé mis en œuvre par ordinateur pour former un classificateur d'images (60) ayant une précision améliorée pour classer des images d'objets physiques prises avec un capteur (30), le procédé comprenant les étapes suivantes :

- accéder, à partir d'une mémoire (146), au classificateur d'images (60), le classificateur d'images (60) ayant été formé en utilisant une pluralité d'images de formation provenant d'un espace d'entrée, les images de formation étant étiquetées pour une pluralité de classes ;
- fournir une image étiquetée d'un objet physique (33) ;
- générer une image antagoniste à l'autre image fournie par au moins un autre objet partiellement translucide (31) fixé à une lentille du capteur (30) avec lequel l'image fournie a été prise, et l'objet physique (33) sur l'image fournie,
où l'autre objet (31) au moins partiellement translucide est configuré pour induire une attaque malveillante sur les images de formation ;
- et former en outre le classificateur d'images (60) pour avoir une précision améliorée en utilisant au moins l'image antagoniste.

2. Procédé selon la revendication 1, dans lequel, pendant la formation supplémentaire, l'image antagoniste est étiquetée avec la même étiquette que l'image étiquetée.

3. Procédé selon la revendication 1 ou la revendication 2, dans lequel l'objet au moins partiellement translucide (31) est monochromatique.

4. Procédé selon l'une quelconque des revendications précédentes, dans lequel l'autre objet au moins partiellement translucide (31) est paramétré par des paramètres comprenant au moins l'un parmi la couleur, le rayon et la position centrale d'une structure de l'objet au moins partiellement translucide (31).

5. Procédé selon l'une quelconque des revendications 1 à 4, dans lequel l'image antagoniste est générée en modifiant des paramètres caractérisant l'autre objet au moins partiellement translucide (31) de telle sorte que l'objet au moins partiellement translucide (31) provoque un changement maximal dans les classifications d'images prises avec le capteur (30), lesdites classifications étant obtenues par le classificateur d'images (60).

6. Procédé selon la revendication 5, dans lequel l'image antagoniste est générée en modifiant des paramètres caractérisant l'autre objet (31) au moins partiellement translucide de telle sorte que le changement provoqué par l'objet (31) au moins partiellement translucide est robuste face aux variations d'au moins un des paramètres.

7. Procédé mis en œuvre par ordinateur pour faire fonctionner un système de commande d'actionneur (40) pour faire fonctionner un actionneur (10), ledit système de commande d'actionneur (40) comprenant un classificateur d'images (60), le procédé comprenant les étapes suivantes :

   former le classificateur d'images (60) avec le procédé selon l'une quelconque des revendications précédentes et faire fonctionner le système de commande d'actionneur (40) en recevant un signal de capteur (S) comprenant des données d'image provenant d'un capteur (30), déterminer un signal d'entrée (x) en fonction dudit signal de capteur (S), alimenter ledit signal d'entrée (x) dans le classificateur d'images (60) pour obtenir un signal de sortie (y),
   faire fonctionner le système de commande d'actionneur (40) en recevant un signal de capteur (S) et en déterminant un signal de commande d'actionneur (A) pour faire fonctionner l'actionneur (10) en fonction d'un signal de sortie (y) du classificateur d'images (60) qui correspond audit signal d'entrée (x).

8. Procédé selon la revendication 7, dans lequel l'actionneur (10) commande un robot (100) au moins partiellement autonome et/ou une machine de fabrication (200) et/ou un assistant personnel automatisé (250) et/ou un système de contrôle d'accès (300).

9. Programme informatique comprenant des instructions qui, lorsque le programme est exécuté par un processeur (45, 145), amènent le processeur (45, 145) à exécuter le procédé selon l'une quelconque des revendications précédentes.

10. Support de stockage lisible par une machine (46, 146) sur lequel est stocké le programme informatique selon la revendication 9.

11. Système comprenant des moyens pour exécuter le procédé de l'une quelconque des revendications 1 à 8.

**Fig. 1**

**Fig. 2**

**Fig. 3**

Fig. 4

**Fig. 5**

EP 3 629 237 B1

**Fig. 6**

**Fig. 7**

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10007866 BB

**Non-patent literature cited in the description**

- **JAN HENDRIK METZEN ; MUMMADI CHAITHAN-YA KUMAR ; THOMAS BROX ; VOLKER FISCHER.** Universal Adversarial Perturbations Against Semantic Image Segmentation. *arXiv pre-print arXiv:1704.05712v3*
- **TOM B. BROWN ; DANDELION MANE ; AURKO ROY ; MARTIN ABADI ; JUSTIN GILMER.** Adversarial Patch. *arXiv:1712.09665v2*
- **KEVIN EYKHOLT ; IVAN EVTIMOV ; EARLENCE FERNANDES ; BO LI ; AMIR RAHMATI ; CHAO-WEI XIAO ; ATUL PRAKASH ; TADAYOSHI KOHNO ; DAWN SONG.** Robust Physical-World Attacks on Deep Learning Models. *arXiv:1707.08945v5*